# EUROPEAN PATENT SPECIFICATION

(11) **EP 1 638 759 B1**
(45) Date of publication and mention of the grant of the patent: **02.08.2006**
(21) Application number: 04765001.5
(22) Date of filing: 09.09.2004
(51) Int. Cl.: B29C 67/24, B32B 19/02, B32B 19/06

(54) **METHOD FOR THE PRODUCTION OF DUAL-LAYER SLAB OR BOARD-LIKE ARTICLES AND SLAB OR BOARD-LIKE ARTICLES WHICH CAN BE OBTAINED BY THE METHOD**
VERFAHREN ZUR HERSTELLUNG VON DOPPELSCHICHTIGEN PLATTEN- ODER TAFELFÖRMIGEN ARTIKELN UND PLATTEN- ODER TAFELFÖRMIGE ARTIKEL, DIE DURCH DAS VERFAHREN ERHALTEN WERDEN KÖNNEN
PROCEDE DE FABRICATION D'ARTICLES DE TYPE PLANCHE OU PLAQUE BICOUCHE ET ARTICLES DE TYPE PLANCHE OU PLAQUE POUVANT ETRE OBTENUS PAR LEDIT PROCEDE

(30) Priority: 29.09.2003 IT TV20030134
(43) Date of publication of application: 29.03.2006
(73) Proprietor: Toncelli, Dario, 36061 Bassano del Grappa (Vicenza) (IT)
(72) Inventor: Toncelli, Dario, 36061 Bassano del Grappa (Vicenza) (IT)
(74) Representative: Agostini, Agostino
(86) International application number: PCT/EP2004/010066
(87) International publication number: WO 2005/030474

(56) References cited:
- EP-A- 0 786 325
- WO-A-00/43192
- WO-A-01/45921
- DE-A- 3 912 647
- GB-A- 2 224 283
- US-B1- 6 177 179

## Description

The present invention relates to the manufacture of conglomerate slabs and more particularly to the manufacture of thin slabs or boards which have a particularly low weight, while retaining good mechanical properties.

Relatively recently a technology for the manufacture of conglomerate slabs, referred to overall as "Bretonstone" technology, has been proposed and implemented on an industrial level. This technology consists essentially in the preparation of a mix comprising granules of one or more natural stone materials or equivalent artificial materials and a binder, chosen from among natural cement binders and synthetic resins.

This mix is deposited on either a temporary support or inside a tray-like mould and subjected to a vacuum compaction step, with the simultaneous application of a vibrating movement. The resultant compacted rough slab is then subjected to a setting step, the mode of implementation of which depends on the nature of the binder. In the case of a cement binder, there will be a first setting step followed by a full setting step which lasts a few days.

In the case, however, of a synthetic resin based binder, such as for example a polyester resin or an epoxy resin, the setting step may be performed in a very short time, by heating the rough slab, if necessary with the aid of a catalyst.

This technology is disclosed in many patents and patent applications. In particular WO 01/45921 discloses an improvement of the basic process in which inorganic fibres, for example glass fibers, are added to the mix during the mixing phase. Moreover, a foil of thermoplastic material is associated to the mix, the foil having hollow protrusions that are closed at their end facing the mix so as to remain firmly attached to the slab which is the end product of the process.

The nature of the granular material forming the mix obviously affects the physical, mechanical and aesthetic characteristics of the resultant slab.

If, for example, a granular material formed by particles of granite or marble is chosen, this will provide the visible surface of the slab with particular special aesthetic properties.

Moreover, the resultant slab may be made with lower thicknesses than a slab made of the same natural stone material, at least maintaining and very often improving the mechanical properties.

Moreover, many measures have been introduced into this technology in order to improve the mechanical properties and obtain slabs with an increasingly lower thickness.

Considering the case of conglomerate articles where the binder is a synthetic resin, it is easily understood that the weight of the slab depends practically entirely on the stone material granular material which is used.

In the past it was proposed to use granular material formed by light material, such as expanded clay or blown glass or similar materials.

By way of example the US patent No. 6,177,179 shall be mentioned, disclosing the production of boards, e. g. to be used as kitchen worktops, which comprise two layers, i.e. a first layer intended to form the visible surface of the board and a second layer forming instead the rear side of said board.

According to the description of this patent, the rear layer or second layer of the board is made from a mixture of a resin and a granular material having a specific weight of less than 0.6 g/cm³ chosen in particular from hollow glass beads, expanded clay, expanded glass, expanded powdered stone, pumice sand, ceramic hollow beads or expanded metal.

The visible or first layer instead consists of a resin mixed with a granular material of a mineral nature.

According to the description of the patent in question, the two layers are formed by means of casting, filling a mould first with the components of the layer intended to form the visible side of the article and then with those of the rear layer.

More specifically the first layer is formed by casting inside the mould a mixture consisting of a syrup of a monomer chosen from among those useful for forming acrylic, polyester or epoxy resins, with the addition of a pre-polymer compatible with the monomer and expedient in particular in the case of acrylic resins, the mixture also comprising the granular material which must have a higher specific weight than the syrup with which it is mixed.

During casting of the first layer, care is taken to settle the granular material prior to the hardening of the resin so as to ensure the uniformity of distribution on the surface and consequently improve the aesthetic properties. This however results in a certain lack of uniformity in the first layer.

During the real manufacture of a board according to this prior patent, before casting the second layer, a separating layer, consisting for example of a film of plastic material, is arranged on the surface of the first layer soon after it has been cast. In this manner it is prevented that, after casting of the second layer, a movement of monomer takes place towards the second layer with a possible formation of bubbles in the first layer.

Preferably the separating layer must be able to form chemical bonds with the adjacent layers. Even more preferably, the separating layer consists of a sheet or film of plastic material, for example polypropylene, polyethylene or polyester, which preferably comprises on the surface facing the second or rear layer a protective layer consisting, for example, of a woven fabric or a glass fibre matting.

The second or rear layer is also formed by a syrup which may have, and preferably has, the same composition as the first layer.

It is also pointed out that, during the manufacturing process, hardening of the resins forming the two cast layers starts from the layer intended to form the visible side.

According to the description of the patent, the resultant article is of a light weight.

However, this technology poses not negligible problems and drawbacks from an industrial point of view.

Firstly, the casting technique requires that the mixtures are highly fluid, so that the proportion of syrup, and consequently of the monomer and pre-polymer added, is very high compared to the content of granular material. Consequently, the article has a high cost, since the resin is undoubtedly the most expensive component of the mixtures.

Secondly, the article has a considerable lack of homogeneity due, on the one hand, to settling of the granular material forming the first layer and, on the other hand, to the provision of the separating film or sheet

Finally, one must not overlook the fact that the production by means of casting always results in very poor physical/mechanical characteristics and a limited propensity for polishing of the articles due to the required high proportion of resin compared to the content of granular material content which precludes the use of a large quantity of fine filler because it would thicken the resin excessively, therefore resulting in process difficulties.

Within the context of "Bretonstone" technology, however, articles have already been produced where the granular material in the starting mix consists of a light material such as expanded clay.

The main object of the present invention is to provide a thin and light dual-layer article which is devoid of the problems and drawbacks mentioned briefly above and associated with the articles produced according to the known art, in particular according to the US patent No. 6,177,179.

This and other objects are achieved by a method for the production of dual-layer slabs comprising a first thin layer, preferably has a thickness of between 4.0 and 5.0 mm, of conglomerate formed from a mix comprising a granular material, a filler and a hardening resin, in which the granular material is intended to form the visible side of the final slab article and determine its aesthetic properties, and a second layer, or thicker rear layer, preferably having a thickness of between 2.0 and 4.0 cm, formed from a mix comprising a hardening resin which is identical to or compatible with that forming said first layer, a filler and a granular material made of light material, said method comprising the following steps:
(a) preparation of a mix consisting of a hardening resin, a filler and a granular material intended to form the visible side of the final slab article;
(b) deposition of the mix in the form of a thin layer - referred to below as first layer - on a support consisting of rubber or similar elastic material - or first rubber sheet - lined with a separating material;
(c) deposition, on the free surface of said first layer, of a web of continuous glass filaments pre-impregnated with a hardening resin identical to or compatible with that forming the mix of said first layer,
(d) deposition, on top of said web, of a thicker layer - referred to below as first layer - of a mix formed by a hardening resin having a nature identical to or compatible with that present in said first layer and in a quantity substantially equal thereto, by a filler and by a light granular material;
(e) application, on top of the free surface of said second layer, of a second sheet of rubber or elastic material lined with separating material;
(f) vacuum compaction by means of application of a pressure on top of said second slab and of a vibratory movement of predetermined frequency;
(g) setting of the hardening resin by means of the action of heat and/or a catalyst;
(h) finishing of the resultant slab article,
   wherein a filler in the form of a fine powder is added to said mixes.

In the preferred embodiment of the method according to the present invention, said light granular material present in the mix of said second layer is an expanded inorganic material with a substantially spheroidal form and having a grain size of between 0.1 and 6.0 mm, chosen preferably from expanded glass or expanded clay, without however excluding the use of other expanded inorganic materials such as alumina.

As a hardening resin, an epoxy resin or a polyester resin is preferably used; in this second case, in a manner known in the art, an organofunctional silane - having the function of forming a chemical bond between the resin and the silicon atoms i the granular material of the mix - is added to the resin.

As regards the granular material present in said first layer, i.e. that intended to form the visible side of the resultant slab or board-like article, it is chosen from among those normally used in "Bretonstone" technology, namely natural stone materials (marble, granite, porphyry, quartz, etc.) and man-made materials such as ceramic materials.

In said first layer, when particular decorative effects are required, it is possible to add other materials or components, such as metal elements, shells, metallized glass granules, fragments of a mirror, silicon granules, etc.

Finally, considering now the filler, it forms, together with the resin, the binding matrix which encapsulates and retains the granular material. The filler is chosen preferably from quartz or carbonate powders, with preference for cristobalite in powder form when it is required to obtain a lighter article. In fact, cristobalite is an allotropic form of quartz with a specific weight of 2.30, while quartz has a specific weight of 2.65.

During the setting step of the method according to the present invention, performed, as already mentioned, by means of catalysis accompanied by heating of the rough-finished article resulting from the vacuum vibro-compaction step, the two sides of the rough-finished article, still enclosed by the rubber slabs, are positioned in contact with two heating plates.

As already mentioned, the two aforementioned layers contain either the same hardening resin or resins compatible with each other in substantially equal quantities, in order to avoid varying shrinkage or warping during catalytic hardening and to also have the same thermal expansion coefficient, so that a deformation of the article once installed, following temperature fluctuations, is avoided. There exists, however, a difference in composition between the two layers which could have similar consequences if steps were not taken to compensate for this imbalance. In particular, the thicker light layer containing granules of expanded material, has a lower heat transmission coefficient which causes it heats more slowly. In order to compensate for this lower heat conductivity, the heating surface in contact with said light layer must be warmer.

For this reason, during hot catalysis, a temperature gradient is established between the two surfaces in contact with the two sides of the rough-finished article, so as to bring the surface which performs heating of said second layer to a temperature which is 6 to 15 °C higher than the surface in contact with the rubber slab which covers the outer side of said first layer. In this way, the lesser heat conductivity of the said second layer is compensated for and the speed of heating of the two layers of the rough-finished article is made uniform, eliminating another possible cause of deformation of the resultant slab or board.

Finally, as regards the web of glass fibres impregnated with hardening resin, its characteristics and its function in the context of Bretonstone technology have been illustrated in the patent application No. PCT/EP2004/008242 to which reference should be made for further details. In this new product the web also performs the function of keeping the two mixes separate, preventing the light layer from being able to contaminate the visible layer, which must maintain optimum aesthetic features.

By the method according to the present invention a slab or board-like article with the required properties of lightness and a low overall thickness is obtained, wherein said first layer forming the visible side has a thickness of between 4 and 6 mm, while said second layer has a thickness in the range of 10 to 40 mm.

During the production of articles according to the invention and in particular the layer forming the visible side, it is possible to use measures which are already known in "Bretonstone" technology, in particular as regards colouring of the mixes and the creation of special chromatic and/or aesthetic effects.

Moreover, with the method according to the present invention, the resultant slab or board-like article has mechanical properties comparable to those of a slab obtained using ''Bretonstone'' technology, therefore retaining the advantages which form the basis of the commercial and industrial success of the "Bretonstone" technology.

For a better understanding of the invention, an example of embodiment, based on the compositions of the mixes forming the two layers, is now provided.

### Example

A single polyester resin has been used in the two mixes indicated below.
Composition (% by volume)of the visible thin layer.
- Polyester resin: 18%
- Fine quartz dust: 22%
- Quartz granular material, 0.1 - 2.5 mm 60%
Composition (% by volume) of the light thick layer :
- Polyester resin: 18%
- Fine cristobalite powder: 18%
- Expanded glass in granules of 0.2-4.0 mm : 64%

The mix of the first layer (visible side) was divided and coloured in three parts, one of which black and the other two using a coloured paste, so as to make full use of the transparency properties of quartz.

The first mix (visible side) was deposited on a rubber sheet having a thickness of about 4 mm and reinforced with a glass meshwork, performing the deposition through a sieve of 8 mm thickness having meshes of 50 x 50 mm.

A web of continuous glass filament having a weight of 300 g/m² and impregnated with polyester resin in an amount of 300 g/m² was deposited on the first mix layer.

After screening the second mix (i.e. that containing the expanded glass granular material) a second rubber sheet was applied and a vacuum pressing performed at a pressure of a few bars, applying at the same time a vibratory movement with a frequency of between 2,000 and 4,000 Hertz. At last, the resultant rough-finished article was subjected to the catalytic setting step at a temperature of between 80 and 150°C.

A perfectly flat slab was thus obtained with dimensions of 3 x 1.4 m, an overall thickness of 35 mm, a flexural strength of 135 kg/cm² and weight of 41 kg/m².

From the above description it is clear that the objects indicated above are achieved by the present invention.

In particular, a slab or board-like article is obtained which is suitable for the realization of floors and claddings, both inside and outside a building, such an article possessing, in addition to the characteristic features of the already known "Bretonstone" slabs, a reduced weight of more than 50%.

It is important to emphasize that in the present invention these objects are achieved owing to the combined use of vacuum vibro-compaction, which is characteristic of Bretonstone technology, of the intermediate web of continuous glass filaments impregnated with hardening resin, and the filler which forms the binding matrix together with the resin.

It is also understood that all the improvements developed in the past in connection with the "Bretonstone" technology, both in a plant where the articles are manufactured and in the structure of the said articles, may be used in the method of the present invention.

## Claims

1. Method for the production of dual-layer slabs comprising a first layer of conglomerate formed from a mix comprising a granular material, a filler and a hardening resin and a second layer, or rear layer, formed from a mix comprising a hardening resin which is identical to, or compatible with, that forming said first layer, and a granular material of a light weight, which comprises the following steps:
(a) preparation of a mix consisting of a hardening resin and a granular material intended to form the visible side of the final slab article;
(b) deposition of the mix in the form of a thin layer - referred to below as first layer - on a support consisting of rubber or similar elastic material - or first rubber sheet - lined with a separating material;
(c) deposition, on the free surface of the first layer, of a web of continuous glass filaments pre-impregnated with a hardening resin identical to, or compatible with, that forming the mix of said first layer;
(d) deposition, on top of said web, of a layer, - referred to below as second layer - of a mix formed by a hardening resin having a nature identical to, or compatible with, that present in said first layer, by a filler and by a light granular material, the said hardening resin being present in the mix with a volumetric percentage substantially equal to that present in said first layer;
(e) application, on top of the free surface of said second layer, of a second sheet of rubber or elastic material lined with separating material;
(f) vacuum compaction by means of application of a pressure on top of said second rubber sheet and simultaneous application of a vibratory movement of predetermined frequency;
(g) hardening of the hardening resin by means of the action of heat and/or a catalyst;
(h) finishing of the resultant slab article;
wherein a filler in the form of a fine powder is added to said mixes.

2. Method according to Claim 1, **characterized in that** said light granular material present in the mix of said second layer is an expanded inorganic material with a substantially spheroidal form, the granules having a size of between 0.1 and 6.0 mm.

3. Method according to Claim 2, **characterized in that** said light granular material is chosen from expanded glass, expanded clay or other expanded inorganic materials such as alumina.

4. Method according to Claim 1, **characterized in that** said hardening resin is preferably an epoxy resin or a polyester resin.

5. Method according to Claim 4, **characterized in that** an organofunctional silane is added to the polyester resin.

6. Method according to Claim 1, **characterized in that** said granular material present in said first layer, intended to form the visible side of the resultant slab or board article, is chosen from natural stone materials such as marble, granite, porphyry, quartz, etc. and man-made materials such as ceramic materials or other materials of lithoid appearance, such as glass, silicon, shells, metals, etc.

7. Method according to Claim 1, **characterized in that** said filler is chosen from quartz or carbonate powders.

8. Method according to Claim 7, **characterized in that** said quartz is in the form of powdered cristobalite.

9. Dual-layer slab article obtained by the method according to any of the preceding claims.

## Patentansprüche

1. Verfahren zum Herstellen von zweischichtigen Platten mit einer ersten Konglomeratschicht, die aus einer Mischung gebildet ist, die ein gekörntes Material, einen Füllstoff und ein Aushärtungsharz enthält, und einer zweiten Schicht oder Rückschicht, die aus einer Mischung gebildet ist, die ein Aushärtungsharz, das identisch oder kompatibel mit demjenigen ist, das die erste Schicht bildet, und ein gekörntes Material geringen Gewichts enthält, mit den folgenden Schritten:
(a) Herrichten einer Mischung bestehend aus einem Aushärtungsharz und einem gekörnten Material, die zum Bilden der sichtbaren Seite des fertigen Plattenartikels vorgesehen ist;
(b) Ablagern der Mischung in Form einer dünnen Schicht - im Folgenden als erste Schicht bezeichnet - auf einem Träger, der aus Gummi oder einem ähnlichen elastischen Material besteht - oder erste Gummischicht - und mit einem Trennmaterial überzogen ist;
(c) Ablagern eines Netzes aus durchgehenden Glasfasern, das mit einem Aushärtungsharz vorimprägniert ist, das identisch oder kompatibel mit demjenigen ist, das die Mischung der ersten Schicht bildet, auf der freien Oberfläche der ersten Schicht;
(d) Ablagern einer Schicht - im Folgenden als zweite Schicht bezeichnet - aus einer Mischung, die gebildet ist aus einem Aushärtungsharz mit einer Natur identisch oder kompatibel mit dem in der ersten Schicht vorhandenen, aus einem Füllstoff und aus einem leichten gekörnten Material, oben auf das Netz, wobei das Aushärtungsharz mit einem prozentualen Volumenanteil, der im Wesentlichen gleich dem in der ersten Schicht vorhandenen ist, in der Mischung vorhanden ist;
(e) Aufbringen einer zweiten Schicht aus Gummi oder einem elastischen Material, die mit einem Trennmaterial überzogen ist, oben auf der freien Oberfläche der zweiten Schicht;
(f) Vakuumverdichtung durch Aufbringen eines Drucks oben auf die zweite Gummischicht und gleichzeitiges Anlegen einer Vibrationsbewegung mit einer vorbestimmten Frequenz;
(g) Aushärten des Aushärtungsharzes durch Einwirkung von Wärme und/oder eines Katalysators;
(h) Nachbearbeitung des resultierenden Plattenartikels,
wobei ein Füllstoff in Form eines feinen Pulvers zu den Mischungen hinzugefügt wird.

2. Verfahren nach Anspruch 1, **dadurch gekennzeichnet, dass** das leichte gekörnte Material, das in der Mischung der zweiten Schicht vorhanden ist, ein aufgeblähtes anorganisches Material mit einer im Wesentlichen sphäroiden Form ist, wobei die Körner eine Größe zwischen 0,1 und 6,0 mm haben.

3. Verfahren nach Anspruch 2, **dadurch gekennzeichnet, dass** das leichte gekörnte Material gewählt ist aus aufgeblähtem Glas, Blähton oder einem anderen aufgeblähten anorganischen Material wie beispielsweise Aluminium.

4. Verfahren nach Anspruch 1, **dadurch gekennzeichnet, dass** das Aushärtungsharz vorzugsweise ein Epoxydharz oder ein Polyesterharz ist.

5. Verfahren nach Anspruch 4, **dadurch gekennzeichnet, dass** zu dem Polyesterharz ein organofunktionales Silan hinzugefügt wird.

6. Verfahren nach Anspruch 1, **dadurch gekennzeichnet, dass** das gekörnte Material, das in der ersten Schicht vorhanden ist, die zum Bilden der sichtbaren Seite des fertigen Platten oder Tafelartikels vorgesehen ist, gewählt ist aus natürlichen Steinmaterialien wie z.B. Marmor, Granit, Porphyr, Quarz und von Menschenhand geschaffen Materialien wie z.B. Keramikmaterialien oder anderen Materialien steinartigen Aussehens wie z.B. Glas, Silizium, Muscheln, Metallen usw.

7. Verfahren nach Anspruch 1, **dadurch gekennzeichnet, dass** der Füllstoff gewählt ist aus Quarz- oder Karbonatpulvern.

8. Verfahren nach Anspruch 7, **dadurch gekennzeichnet, dass** das Quarz in Form pulverisierten Cristobalits vorliegt.

9. Zweischichtiger Plattenartikel, der durch das Verfahren nach einem der vorausgehenden Ansprüche gewonnen wird.

## Revendications

1. Procédé pour la production de dalles double couche, comprenant une première couche de conglomérat formée à partir d'un mélange comprenant un matériau granulaire, une charge et une résine de durcissement, et une deuxième couche, ou couche arrière, formée à partir d'un mélange comprenant une résine de durcissement qui est identique à celle formant ladite première couche ou compatible avec celle-ci, et un matériau granulaire de faible poids, qui comprend les étapes suivantes :
(a) préparation d'un mélange constitué d'une résine de durcissement et d'un matériau granulaire, destiné à former le côté visible de l'article en dalle final ;
(b) déposition du mélange sous la forme d'une couche mince - appelée ci-dessous première couche - sur un support constitué de caoutchouc ou d'un matériau élastique similaire - ou première feuille de caoutchouc - doublé par un matériau de séparation ;
(c) déposition, sur la surface libre de la première couche, d'une toile de filaments continus de verre pré-imprégnés avec une résine de durcissement identique à celle formant le mélange de ladite première couche, ou compatible avec celle-ci ;
(d) déposition, sur le dessus de ladite toile, d'une couche - appelée ci-dessous deuxième couche - d'un mélange formé par une résine de durcissement ayant une nature identique à celle présente dans ladite première couche, ou compatible avec celle-ci, par une charge et par un matériau granulaire léger, ladite résine de durcissement étant présente dans le mélange avec un pourcentage volumétrique pratiquement égal à celui de la résine présente dans ladite première couche ;
(e) application, sur le dessus de la surface libre de ladite deuxième couche, d'une deuxième feuille de caoutchouc ou de matériau élastique doublée par un matériau de séparation ;
(f) compactage sous vide au moyen de l'application d'une pression sur le dessus de ladite deuxième feuille de caoutchouc et de l'application simultanée d'un mouvement vibratoire de fréquence prédéterminée ;
(g) durcissement de la résine de durcissement au moyen de l'action de la chaleur et/ou d'un catalyseur ;
(h) finissage de l'article en dalle résultant ;
dans lequel une charge sous la forme d'une poudre fine est ajoutée auxdits mélanges.

2. Procédé selon la revendication 1, **caractérisé en ce que** ledit matériau granulaire léger présent dans le mélange de ladite deuxième couche est un matériau inorganique expansé ayant une forme pratiquement sphéroïdale, les granules ayant une taille comprise entre 0,1 et 6,0 mm.

3. Procédé selon la revendication 2, **caractérisé en ce que** ledit matériau granulaire léger est choisi parmi le verre expansé, l'argile expansé et d'autres matériaux expansés inorganiques tels que l'alumine.

4. Procédé selon la revendication 1, **caractérisé en ce que** ladite résine de durcissement est de préférence une résine époxy ou une résine de polyester.

5. Procédé selon la revendication 4, **caractérisé en ce qu'**un silane organofonctionnel est ajouté à la résine de polyester.

6. Procédé selon la revendication 1, **caractérisé en ce que** ledit matériau granulaire présent dans ladite première couche, destiné à former le côté visible de l'article en dalle ou en plaque résultant, est choisi parmi les matériaux en pierre naturelle tels que le marbre, le granit, la porphyre, le quartz, etc., et les matériaux synthétiques tels que les matériaux céramiques ou d'autres matériaux ayant un aspect lithoïde, tels que le verre, le silicium, les coquilles, les métaux, etc.

7. Procédé selon la revendication 1, **caractérisé en ce que** ladite charge est choisie parmi les poudres de quartz et de carbonate.

8. Procédé selon la revendication 7, **caractérisé en ce que** ledit quartz est sous la forme d'une cristobalite en poudre.

9. Article en dalle double couche obtenu par le procédé selon l'une quelconque des revendications précédentes.
